# FASCICULE DE BREVET EUROPEEN

(11) **EP 1 478 455 B1**
(45) Date de publication et mention de la délivrance du brevet: **02.04.2008**
(21) Numéro de dépôt: 03720651.3
(22) Date de dépôt: 27.02.2003
(51) Int. Cl.: B01J 12/00

(54) **REACTEUR POUR LE TRAITEMENT PAR PLASMA D'UN FLUX GAZEUX, NOTAMMENT DES GAZ D'ECHAPPEMENT PRODUIT PAR LE MOTEUR A COMBUSTION INTERNE D'UN VEHICULE AUTOMOBILE.**
REAKTOR ZUR PLASMABEHANDLUNG EINES GASSTROMS INSBESONDERE VON ABGASEN AUS EINEM VERBRENNUNGSMOTOR EINES KRAFTFAHRZEUGS
REACTOR FOR TREATING A GAS FLOW WITH PLASMA, PARTICULARLY EXHAUST GASES PRODUCED BY THE INTERNAL COMBUSTION ENGINE IN A MOTOR VEHICLE

(30) Priorité: 27.02.2002 FR 0202475
(43) Date de publication de la demande: 24.11.2004
(73) Titulaire: RENAULT S.A.S., 92100 Boulogne Billancourt (FR); Peugeot Citroën Automobiles S.A., 78140 Vélizy Villacoublay (FR)
(72) Inventeur: Calvo, Sabine, F-78340 Les Clayes Sous Bois (FR); Dionnet, Frédéric, F-27520 Berville en Roumois (FR); Eymerie, Stéphane, F-27120P acy Sur Eure (FR); Lendresse, Yvane, F-92500 Rueil Malmaison (FR); Robin, Lionel, F-76000 Rouen (FR); Vervisch, Pierre, F-76000 Rouen (FR)
(74) Mandataire: Colas, Jean-Pierre
(86) Numéro de dépôt international: PCT/FR2003/000635
(87) Numéro de publication internationale: WO 2003/072239

(56) Documents cités:
- WO-A-00/49278
- WO-A-00/51714
- US-B1- 6 334 982

## Description

La présente invention est relative à un réacteur destiné au traitement par plasma de flux gazeux, notamment pour le traitement des gaz d'échappement produits par un moteur à combustion interne d'un véhicule automobile.

La réglementation sur les émissions des véhicules automobiles concerne essentiellement quatre polluants qui sont les HC (hydrocarbures imbrûlés), le CO (monoxyde de carbone), les NOx (oxydes d'azote) et les particules solides.

Dans le cas d'un moteur à combustion interne fonctionnant avec un excès d'oxygène (moteur à essence à mélange pauvre ou moteur diesel), la réduction des émissions de HC et de CO est obtenue grâce à un catalyseur d'oxydation fonctionnant à haute température et permettant de les transformer pratiquement entièrement en dioxyde de carbone (CO₂).

Les émissions de NOx peuvent être capturées et stockées dans un piège dit "piège Nox" qui, doit périodiquement être régénéré par une augmentation temporaire de la richesse du mélange carburé.

Par ailleurs, le traitement des particules engendrées surtout par les moteurs diesel, est également effectué dans un piège devant être régénéré. La régénération se fait par oxydation des particules (suies) accumulées, à l'aide de l'oxygène présent en excès. La température d'amorçage de la réaction correspondante est relativement élevée (>600°C) de sorte qu'une stratégie d'aide par la commande du moteur (ex: post-injection, injection décalée) est nécessaire pour permettre une régénération quelle que soit la condition de roulage.

Une solution alternative consiste à coupler la stratégie d'aide par la commande du moteur à l'ajout d'additifs catalytiques dans le carburant pour abaisser la température de combustion en deçà de 600°C de l'ordre d'une centaine de degrés. Une autre solution alternative à la précédente consiste à utiliser un filtre à particules imprégné d'une phase catalytique.

Ces processus classiques de traitement des émissions sont complexes et induisent un surcoût important de la ligne d'échappement, leur rendement étant par ailleurs variable en fonction des conditions de roulage du véhicule.

Pour pallier ces inconvénients, il est déjà connu de faire appel à la technologie dite des plasmas non thermiques qui consiste à former des espèces métastables, des radicaux libres et des ions très réactifs par collision entre des molécules de gaz et des électrons très énergétiques produits par une décharge électrique sans augmentation de la température du milieu gazeux.

La décharge peut être obtenue en appliquant entre des électrodes une différence de potentiel de plusieurs kilovolts générant ainsi des impulsions électriques d'intensité variable suivant le mode d'excitation (d'une centaine de microampères et quelques centaines d'ampères, par exemple). Les décharges provoquent la formation d'un grand nombre de molécules et d'espèces telles que le NO₂, l'ozone (O₃), des radicaux, des hydrocarbures partiellement oxydés, des espèces carbonées solides activées, comme les suies etc. Ces molécules et espèces plus réactives que les produits bruts émis dans la ligne d'échappement, peuvent être transformées en espèces non polluantes par un traitement approprié.(exemple : passage sur un catalyseur).

Un réacteur fonctionnant sur la base de cette technologie est décrit par exemple dans le document WO 00/51714. Dans ce cas, le réacteur comprend un corps cylindrique creux en un matériau diélectrique dans lequel sont ménagés des passages pour les gaz à traiter. Ces passages sont prévus dans une zone intermédiaire du corps diélectrique, tandis que les électrodes sont prévues respectivement à la surface périphérique et à la surface d'un alésage axial interne. Cette disposition présente essentiellement l'inconvénient que les électrodes sont très éloignées l'une de l'autre de sorte que la tension à appliquer doit être très élevée. Par ailleurs, du fait que l'espace entre les électrodes est occupé de façon non uniforme par de la matière céramique et par des canaux par lesquels s'écoulent les gaz traités, les effets stimulants du champ électrique ne peuvent être uniformes non plus.

Une solution permettant de remédier à cet inconvénient est décrite dans un autre document WO 00/49 278. Dans ce cas, le réacteur comporte une enveloppe cylindrique dans laquelle peuvent circuler axialement les gaz à traiter à travers un réseau de lits superposés d'électrodes filaires, alternativement positives et négatives, la haute tension étant appliquée respectivement aux lits d'électrodes de façon à former entre eux des champs électriques respectifs.

Chaque électrode est passée à travers une série de pions cylindriques alignés axialement, des pions contigus se trouvant dans un même plan radial étant entretoisés par une grille de support fixée dans l'enveloppe.

Cette disposition, certes, apporte une meilleure uniformité du champ électrique et rapproche l'une de l'autre des électrodes de polarités opposées avec comme corollaire que la tension peut être réduite, mais elle est extrêmement complexe et fragile de sorte qu'elle provoque un surcoût de construction important et présente un risque de détérioration au cours de son utilisation.

L'invention a pour but de fournir un réacteur du type général indiqué, mais qui soit débarrassé des inconvénients de la technique antérieure.

L'invention a donc pour objet un réacteur destiné au traitement de flux gazeux par plasma, notamment pour le traitement des gaz d'échappement produits par un moteur à combustion interne d'un véhicule automobile, comportant un corps de réacteur de forme générale allongée, réalisé en un matériau diélectrique et traversé par une pluralité de canaux parallèles s'étendant longitudinalement dans ledit corps, des moyens d'entrée et de sortie pour conduire le flux de gaz à traiter à travers ledit corps et des électrodes destinées à créer dans ledit corps des décharges corona pour y stimuler le traitement dudit flux gazeux caractérisé en ce que chacune desdites électrodes est disposée dans un canal faisant partie de ladite pluralité de canaux et s'étend sur au moins une portion de la longueur du canal correspondant.

Grâce à ces caractéristiques, on obtient un réacteur présentant une structure robuste et compacte dans laquelle on peut engendrer un champ électrique homogène favorisant une répartition uniforme des décharges électriques et permettant un traitement homogène des gaz à traiter. En outre, l'invention permet, sans modifications majeures d'utiliser les ossatures monolithiques utilisées classiquement dans la technologie du traitement des gaz d'échappement

Selon d'autres particularités avantageuses de l'invention:
- les canaux sont disposés côte à côte dans ledit corps de réacteur selon des plans superposés longitudinaux, lesdites électrodes étant agencées en au moins deux lits d'électrodes parallèles dont l'un comprend des électrodes destinées à être reliées à l'un des pôles d'une source de haute tension et dont l'autre comprend des électrodes destinées à être agencées pour être reliées à l'autre pôle de ladite source de haute tension, lesdits lits d'électrodes étant écartés l'un de l'autre d'une distance prédéterminée;
- les extrémités des électrodes d'un même lit d'électrodes et situées à une même face frontale dudit corps de réacteur, sont connectées en commun à une barre conductrice de l'électricité et raccordée au pôle correspondant de ladite source de haute tension;
- ladite barre de connexion est disposée dans une rainure ménagée dans une face d'extrémité du corps de réacteur,
- ladite rainure recevant ladite barre de connexion est obturée par une matière diélectrique;
- l'extrémité de chaque électrode opposée à ladite barre de connexion est noyée dans une matière diélectrique obturant le canal recevant cette électrode à l'extrémité correspondante;
- il est prévu au moins trois lits d'électrodes et le ou les lits d'électrodes connecté(s) à l'un des pôles de ladite source de haute tension est/sont disposé(s) entre deux lits d'électrodes connectés à l'autre pôle de ladite source de haute tension;
- les électrodes de deux lits d'électrodes superposés adjacents sont disposées dans des canaux alignés dans des plans perpendiculaires à ces lits d'électrodes;
- les électrodes de deux lits d'électrodes superposés adjacents sont insérées dans des canaux respectifs disposés en quinconce;
- lesdites électrodes sont formées par des tiges, de préférence de section générale circulaire;
- les tiges d'au moins certaines desdites électrodes sont munies d'aspérités ou reliefs;
- les aspérités ou reliefs des électrodes s'étendent selon un profil hélicoïdal le long de celles-ci;
- ledit corps de réacteur est réalisé en céramique tel que la cordiérite.

L'invention a également pour objet un filtre à particules caractérisé en ce qu'il comporte un réacteur tel que défini ci-dessus et en ce que les canaux dudit corps de réacteur dépourvus d'électrodes sont alternativement obturés sur l'une ou l'autre face dudit corps.

Dans ce filtre à particules des canaux situés dans deux plans parallèles adjacents dans ledit corps de réacteur peuvent être obturés respectivement à l'une ou à l'autre face dudit corps. Mais il est également possible de prévoir que des canaux adjacents situés dans un même plan dudit corps de réacteur sont alternativement obturés à l'une et à l'autre face dudit corps. Par ailleurs, les parois des canaux peuvent être revêtues d'un matériau catalytique.

L'invention a encore pour objet un catalyseur caractérisé en ce qu'il comprend un réacteur tel que défini ci-dessus caractérisé en ce que les canaux du corps de réacteur dépourvus d'électrodes sont ouverts sur les deux faces du corps de réacteur.

D'autres caractéristiques et avantages de la présente invention apparaîtront au cours de la description qui va suivre, donnée uniquement à titre d'exemple et faite en se référant aux dessins annexés sur lesquels:
- la figure 1 est une vue générale extérieure en perspective d'un réacteur selon l'invention avec arrachement partiel;
- la figure 2 une vue en coupe longitudinale partielle d'un corps de réacteur selon l'invention, placé dans l'enveloppe du réacteur représenté sur la figure 1, ce dernier constituant plus particulièrement un filtre à particules à régénération;
- la figure 2a est une vue en perspective et à grande échelle d'un détail d'une électrode du réacteur,
- la figure 3 est une vue en coupe longitudinale partielle du corps de réacteur de la figure 2, la coupe étant prise dans un plan d'électrodes à 90° par rapport à la vue de la figure 2;
- la figure 4 est une vue en coupe analogue à celle de la figure 3, d'un corps de réacteur destiné plus particulièrement à être utilisé comme catalyseur,
- la figure 5 est une vue partielle en perspective d'une extrémité d'un corps de réacteur selon l'invention, pour montrer un exemple de disposition et de forme des canaux;
- les figures 6 et 7 illustrent d'autres dispositions possibles des électrodes dans un corps de réacteur destiné plus particulièrement à être utilisé comme filtre à particules à régénération;
- les figures 8 et 9 illustrent deux exemples possibles de l'obturation des canaux du corps de réacteur, et
- la figure 10 est un exemple de forme d'impulsion de tension pouvant être appliquée entre les lits d'électrodes de polarités opposées.

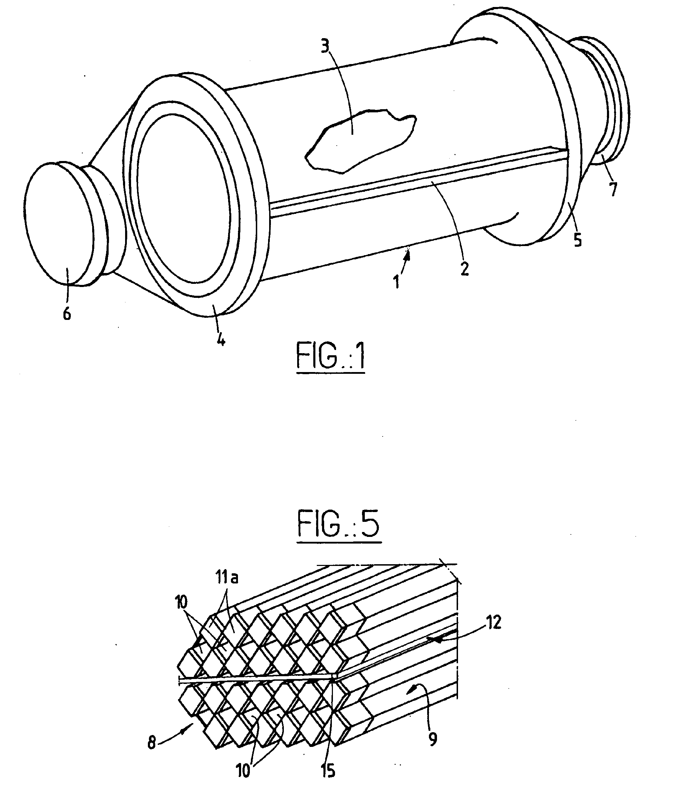

La figure 1 représente une vue extérieure en perspective d'un réacteur selon l'invention, pouvant servir soit comme filtre à particules à régénération soit comme catalyseur. On aperçoit de ce réacteur une enveloppe 1, ici de forme cylindrique et réalisée de préférence en une tôle d'acier, inoxydable ou non, réunie par deux bords le long d'un joint serti 2 par exemple. Cette enveloppe est garnie intérieurement d'un revêtement 3 formé d'un isolant tel que de la laine thermique de type INTERAM, par exemple. L'enveloppe 1 est fermée à ses deux extrémités par des brides 4 et 5 pourvues de raccords respectifs 6 et 7 pour le branchement du réacteur dans une ligne d'échappement (non représentée). Il est à noter que l'exemple de la figure 1 présente un réacteur de forme générale cylindrique qui n'est pas limitative de l'invention, d'autres formes générales analogues à celles usuelles pour les réacteurs dans l'industrie automobile, étant envisageables.

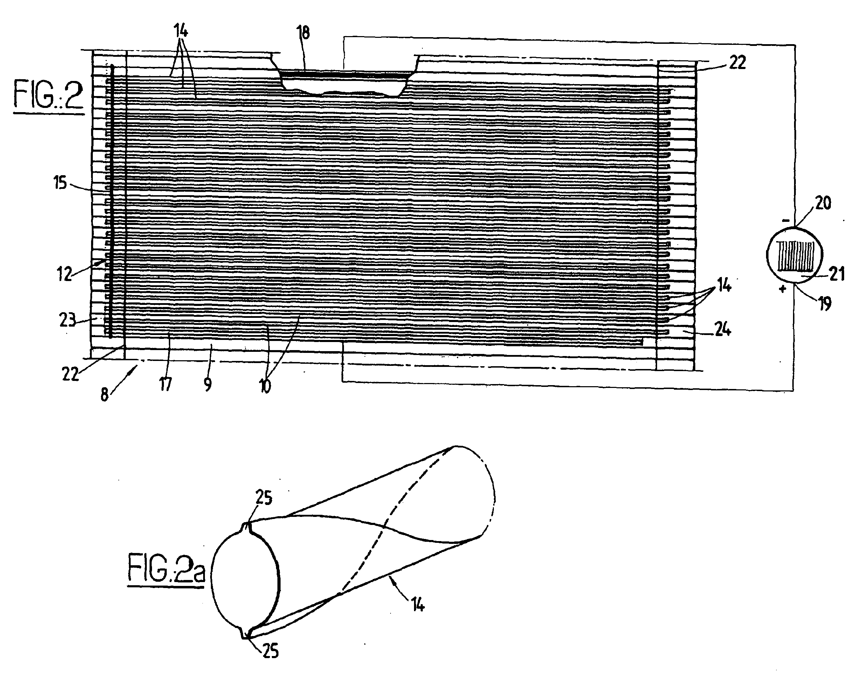

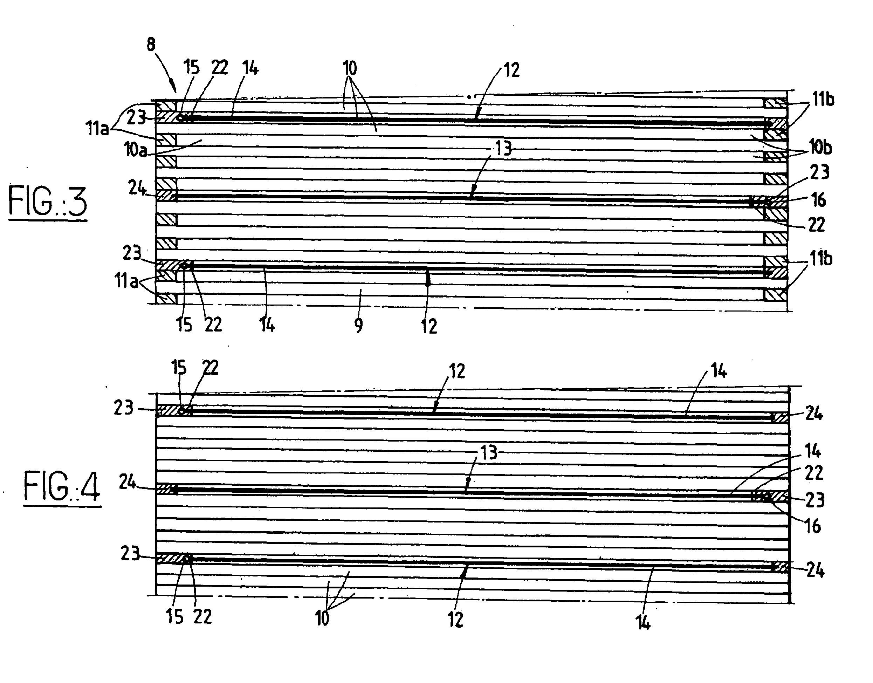

On va maintenant se référer aux figures 2, 3 et 5 qui représentent l'un des modes de réalisation préférés possibles d'un corps de réacteur 8 selon l'invention, destiné à être placé dans l'enveloppe 1 du réacteur à l'intérieur du revêtement 3 qui en assure ainsi à la fois l'étanchéité, l'isolation thermique et la protection contre les vibrations de la ligne d'échappement Pour ce qui concerne les figures 2 et 3, il s'agit de vues partielles prises selon des plans de coupe longitudinaux décalés de 90° l'un par rapport à l'autre. Le corps de réacteur 8 ainsi agencé permet de construire un filtre de particules à régénération, comme expliqué plus en détail ci-après.

Le corps de réacteur 8 est formé d'une ossature monolithique 9 de forme générale allongée dans laquelle est aménagée une pluralité de canaux 10 s'étendant tous parallèlement dans la direction longitudinale du corps 8. Dans le mode de réalisation représenté, ces canaux 10 présentent, considéré en section transversale de l'ossature, un réseau en nid d'abeille, la section de chaque canal 10 étant carrée (voir la figure 5). Cet exemple n'est pas limitatif, d'autres dispositions des canaux les uns par rapport aux autres et d'autres sections de canaux, telles que hexagonales par exemple, étant envisageables.

L'ossature monolithique 9 est réalisée de préférence en une matière présentant une très faible conductivité diélectrique et l'aptitude à travailler à haute température. Il s'est avéré qu'une matière céramique, typiquement la cordiérite convient bien à cet effet L'ossature 9 peut être réalisée par tout procédé connu dans la technologie des catalyseurs et/ou filtres à particules. Les parois des canaux 10 peuvent éventuellement être revêtues d'un matériau catalytique.

S'agissant, dans le mode de réalisation des figures 2 et 3, d'un corps de réacteur 8 pour filtre à particules, les canaux 10 comportent des bouchons 11a et 11b situés respectivement aux extrémités du corps de réacteur, étant entendu qu'un canal donné, par exemple le canal 10a (figure 3) comporte un bouchon 11a, côté entrée (à gauche sur les figures 2 et 3) du corps de réacteur 8, alors que les canaux voisins du canal 10a, par exemple les canaux 10b, comprennent un bouchon 11 b situés du côté sortie du corps de réacteur (à droite sur les figures 2 et 3). De la sorte, sur leur trajet de l'entrée à la sortie du corps de réacteur 8, les gaz à traiter sont contraints à traverser les parois séparant les canaux les uns des autres afin que les particules qu'ils contiennent puissent être retenues et éliminées par régénération.

Selon une caractéristique importante de l'invention, le réacteur comprend une pluralité de lits d'électrodes 12 et 13, respectivement, trois de ces lits d'électrodes étant visibles sur la figure 3.

Chaque lit d'électrodes 12 et 13 est formé d'une pluralité d'électrodes 14 agencées dans les canaux 10 du support 8, parallèlement les unes aux autres, chaque électrode étant constituée par une tige en un matériau conducteur de l'électricité. Dans le mode de réalisation représenté, le diamètre d'une électrode est choisi de préférence légèrement inférieur à la longueur du côté de la section d'un canal 10 de l'ossature 9, afin de permettre la dilatation thermique de l'électrode.

Les électrodes 14 d'un lit d'électrodes 12 ou 13 sont connectées électriquement les unes aux autres par une barre de connexion transversale 15, respectivement 16 située à l'une de leurs extrémités. Chaque barre de connexion 15 ou 16 peut simplement être mise en contact avec les électrodes 12 ou 13 respectives ou éventuellement y être soudée ou brasée. Les barres transversales 15 et 16 sont à leur tour en contact électrique avec des tiges respectives de contact 17, respectivement 18, qui sont situées latéralement par rapport au corps de réacteur 8 et par l'intermédiaire desquelles les lits d'électrodes 12 et 13 sont reliées respectivement au pôle positif 19 et au pôle négatif 20 d'une source de haute tension 21 au moyen de conducteurs électriques appropriés qui n'ont pas été représentés aux dessins.

De la sorte, dans l'exemple représenté, les lits d'électrodes 12 forment des plans d'anode du réacteur, tandis que les lits d'électrodes 13 forment des plans de cathode. On notera que la figure 3 ne fait apparaître que trois plans d'électrodes. Toutefois, on comprendra que ce nombre n'est pas limitatif, un corps de réacteur 8 pouvant comprendre une pluralité de lits d'électrodes, étant entendu qu'un plan de cathode se trouve toujours situé entre deux plans d'anode ou inversement. Il est également envisageable de ne prévoir qu'un seul plan anodique coopérant avec un seul plan cathodique. D'une manière générale, le nombre de plans d'électrodes est choisi en fonction de plusieurs critères, tels que par exemple la valeur de la haute tension, la distance que l'on peut prévoir entre deux plans d'électrodes de polarités opposées, distance qui est elle-même déterminée par le volume du corps de réacteur, etc.

Les barres de connexion transversales 15 et 16 sont logées dans des rainures frontales 22 ménagées dans les faces d'extrémité de l'ossature 9. Après mise en place de chaque lit d'électrodes, ces rainures 22 sont remplies par un bouchonnage 23 en pâte de céramique, comme le sont d'ailleurs, à leur extrémité opposée, les canaux 10 recevant une électrode, grâce à des bouchonnages 24 également en pâte de céramique. On évite ainsi aux endroits correspondants l'apparition de décharges parasites dues à l'effet de pointe.

De préférence, comme représenté sur la vue de détail de la figure 2a, les électrodes 14 des lits d'électrodes anodiques et/ou cathodiques 12, 13 sont pourvues d'aspérités ou de reliefs hélicoïdaux 25 courant sur toute leur longueur. Dans l'exemple représenté, deux de ces aspérités hélicoïdales sont décalées de 180° l'une par rapport à l'autre en considérant la section transversale de l'électrode 14. Ces aspérités sont destinées à favoriser l'effet de pointe dans les zones du corps de réacteur 8 dans lesquelles le traitement des gaz est mis en oeuvre, c'est à dire là où doivent avoir lieu les décharges corona.

La matière dont sont faits les bouchons 11a et 11b, ainsi que les bouchonnages 23 et 24 présentent de préférence une faible conductivité diélectrique. Avantageusement, cette matière est la même que celle de l'ossature 9, ce qui évite les problèmes de dilatation thermique.

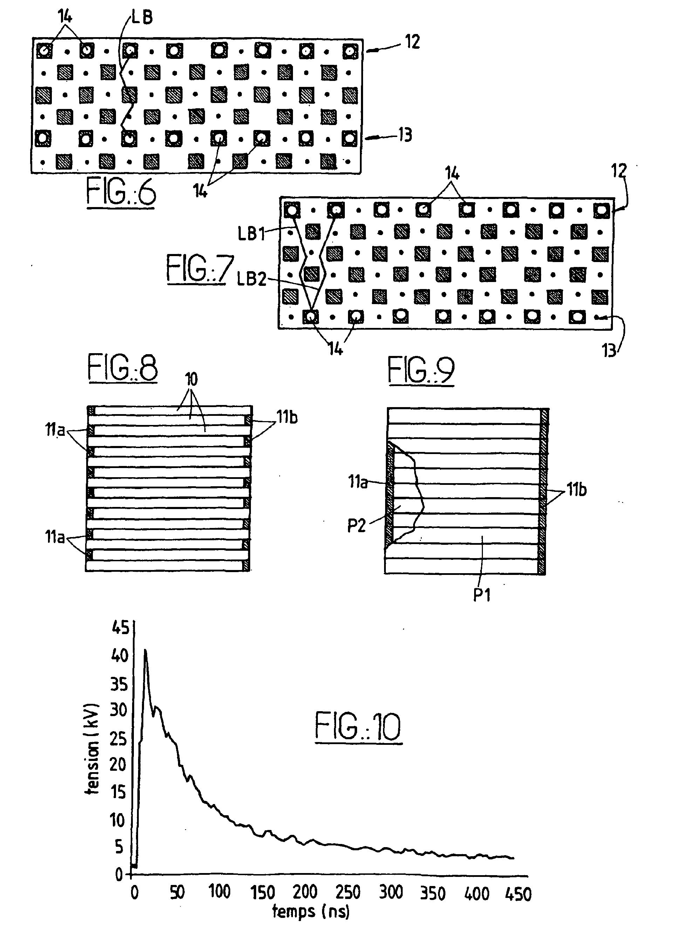

La source de haute tension 21 peut être conçue pour fournir une tension continue appliquée en permanence entre les lits d'électrodes anodiques et cathodiques 12 et 13. Cependant, il s'est avéré que le traitement des gaz peut être favorisé et l'énergie transférée peut être augmentée, si la haute tension issue de la source 21 est de type impulsionnel, les impulsions ayant de préférence un front de montée raide. A titre d'exemple, on peut utiliser une impulsion dont la pente peut être de quelques kV/nanoseconde par exemple est représenté à la figure 10. Par rapport à une alimentation appliquée en continu, une source impulsionnelle permet de rendre optimale l'énergie injectée dans le réacteur en autorisant des niveaux de tension de crête supérieurs à la tension continue de claquage inhérente à l'ossature 9. Typiquement, la source impulsionnelle fournit une tension minimale de 10 à 40 kV, un front de montée des impulsions inférieur à 10 ns, une largeur d'impulsion aussi faible que possible (inférieure à quelques centaines de ns), et une fréquence de répétition de 1 Hz à 1 kHz, toutes ces valeurs n'étant données qu'à titre d'exemple. La puissance de la source 21 sera choisie en fonction du nombre de décharges à établir entre les lits d'électrodes 12 et 13, du nombre d'électrodes prévues dans chaque lit, de l'espacement entre les lits d'électrodes 12 et 13 des caractéristiques du diélectrique dont est faite l'ossature 9 et du coefficient diélectrique du milieu gazeux circulant dans le filtre.

La figure 4 représente par une vue analogue à celle de la figure 3, un exemple de réacteur servant de catalyseur. Dans ce cas, les canaux dépourvus des lits d'électrodes 12 et 13 sont ouverts d'une extrémité à l'autre du corps de réacteur 8 de sorte que les gaz à traiter traversent sans entrave l'ensemble du réacteur. En revanche, les canaux garnis d'électrodes sont bouchés à chaque extrémité comme cela a été décrit à propos du mode de réalisation des figures 2, 3 et 5.

Dans les modes de réalisation des figures 2, 3 et 5 d'une part et de la figure 4 d'autre part, il est supposé que dans chaque lit d'électrodes 12 et 13, des électrodes sont prévues dans tous les canaux adjacents 10 situés dans un même plan de l'ossature monolithique 9. Cette disposition permet d'obtenir une densité maximale de décharges corona dans le corps de réacteur 8, mais elle nécessite une puissance électrique importante.

La variante de l'invention qui est représentée sur la figure 6, consiste à réduire le nombre d'électrodes par lit d'électrodes, en ne prévoyant une électrode qu'une fois sur deux dans les canaux adjacents prévus pour recevoir les lits d'électrodes 12 et 13 respectivement anodiques et cathodiques. Dans ces conditions, la densité des décharges corona est évidemment moindre, mais dans certains cas de figure, ceci peut être suffisant pour assurer un traitement satisfaisant des gaz traversant le réacteur. La ligne brisée LB sur la figure symbolise une décharge.

Dans la variante de la figure 7, la densité des décharges corona peut être augmentée par rapport à celle pouvant être assurée dans l'agencement de la figure 6, en prévoyant dans deux lits adjacents d'électrodes 12 et 13 respectivement anodique et cathodique des électrodes dans un canal sur deux, cependant que les électrodes sont disposées en quinconce dans les deux lits. Dans cet agencement, des décharges corona peuvent s'établir selon deux chemins préférentiels par exemple entre deux électrodes du lit 12 et une seule électrode du lit 13. Des décharges corona de cette nature sont symbolisées par les lignes brisées LB1 et LB2.

Sur les figures 6 à 9 on voit que dans le cadre d'un réacteur utilisé en tant que filtre à particules, deux façons sont possibles permettant d'obturer les canaux à l'une de leurs extrémités. Sur les figures 6, 7 et 8, il est supposé que les canaux situés dans un même plan du corps de réacteur 8 sont obturés par des bouchons 11a et 11b situés alternativement à une face du corps et à l'autre face (ceci est également le cas dans le mode de réalisation des figures 2 et 3.

En revanche, dans la variante de la figure 9, les canaux 10 d'un même plan P1 du corps de réacteur 8 sont tous obturés du même côté de celui-ci, alors que ceux situés dans un plan adjacent P2 le sont du côté opposé.

## Revendications

1. Réacteur destiné au traitement de flux gazeux par plasma, notamment pour le traitement des gaz d'échappement produits par un moteur à combustion interne d'un véhicule automobile, comportant un corps de réacteur (8) de forme générale allongée, réalisé en un matériau diélectrique et traversé par une pluralité de canaux parallèles (10) s'étendant longitudinalement dans ledit corps, des moyens d'entrée et de sortie (6, 7) pour conduire le flux de gaz à traiter à travers ledit corps (8) et des électrodes (14) destinées à créer dans ledit corps des décharges corona pour y stimuler le traitement dudit flux gazeux **caractérisé en ce que** chacune desdites électrodes (14) est disposée dans un canal (10) faisant partie de ladite pluralité de canaux (10) et s'étend sur au moins une portion de la longueur du canal correspondant, **en ce que** les canaux (10) sont disposés côte à côte dans ledit corps de réacteur (8) selon des plans superposés longitudinaux, **en ce que** lesdites électrodes (14) sont agencées en au moins deux lits d'électrodes parallèles (12, 13) dont l'un comprend des électrodes destinées à être reliées à l'un des pôles d'une source de haute tension (21) et dont l'autre comprend des électrodes destinées à être agencées pour être reliées à l'autre pôle de ladite source de haute tension (21), et **en ce que** lesdits lits d'électrodes (12, 13) sont écartés l'un de l'autre d'une distance prédéterminée.

2. Réacteur selon la revendication 1, **caractérisé en ce que** les extrémités des électrodes (14) d'un même lit d'électrodes (12, 13) et situées à une même face frontale dudit corps de réacteur (8), sont connectées en commun à une barre (15, 16) conductrice de l'électricité et raccordée au pôle correspondant de ladite source de haute tension (21)

3. Réacteur selon la revendication 2, **caractérisé en ce que** ladite barre de connexion (15, 16) est disposée dans une rainure (22) ménagée dans une face d'extrémité du corps de réacteur (8).

4. Réacteur selon la revendication 3, **caractérisé en ce que** ladite rainure (22) recevant ladite barre de connexion (15, 16) est obturée par une matière diélectrique (23).

5. Réacteur selon l'une quelconque des revendications 2 à 4, **caractérisé en ce que** l'extrémité de chaque électrode (1') opposée à ladite barre de connexion (15, 16) est noyée dans une matière diélectrique (14) obturant le canal (10) recevant cette électrode, à l'extrémité correspondante.

6. Réacteur selon l'une quelconque des revendications 1 à 5, **caractérisé en ce qu'**il comprend au moins trois lits d'électrodes (12, 13) et **en ce que** le ou les lits d'électrodes connecté(s) à l'un des pôles de ladite source de haute tension (21) est/sont disposé(s) entre deux lits d'électrodes connectés à l'autre pôle de ladite source de haute tension (21).

7. Réacteur selon l'une quelconque des revendications 1 à 4, **caractérisé en ce que** les électrodes (14) de deux lits d'électrodes superposés adjacents (12, 13) sont disposées dans des canaux (10) alignés dans des plans perpendiculaires à ces lits d'électrodes.

8. Réacteur selon l'une quelconque des revendications 1 à 4, **caractérisé en ce que** les électrodes (14) de deux lits d'électrodes superposés adjacents (12, 13) sont insérées dans des canaux respectifs disposés en quinconce.

9. Réacteur selon l'une quelconque des revendications précédentes, **caractérisé en ce que** lesdites électrodes (14) sont formées par des tiges, de préférence de section générale circulaire.

10. Réacteur selon la revendication 9, **caractérisé en ce que** les tiges d'au moins certaines desdites électrodes (14) sont munies d'aspérités ou de reliefs (25).

11. Réacteur selon la revendication 10, **caractérisé en ce que** les aspérités (25) ou les reliefs des électrodes (14) s'étendent selon un profil hélicoïdal le long de celles-ci.

12. Réacteur selon l'une quelconque des revendications précédentes, **caractérisé en ce que** ledit corps de réacteur (8) est réalisé en céramique tel que le cordiérite.

13. Filtre à particules **caractérisé en ce qu'**il comporte un réacteur selon une quelconque des revendications précédentes et **en ce que** les canaux (10) dudit corps de réacteur (8) dépourvus d'électrodes (14) sont alternativement obturés (11a, 11b) sur l'une ou à l'autre face dudit corps.

14. Filtre à particules selon la revendication 13, **caractérisé en ce que** des canaux situés dans deux plans parallèles adjacents (P1, P2) dans ledit corps de réacteur (8) sont obturés (11 a, 11 b) respectivement à l'une ou à l'autre face dudit corps.

15. Filtre à particules selon la revendication 13, **caractérisé en ce que** des canaux adjacents (10) situés dans un même plan dudit corps de réacteur sont alternativement obturés (11a, 11b) à l'une et à l'autre face dudit corps.

16. Filtre à particules selon l'une quelconque des revendications 13 à 15, **caractérisé en ce que** les parois des canaux sont revêtues d'un matériau catalytique.

17. Catalyseur **caractérisé en ce qu'**il comprend un réacteur suivant l'une quelconque des revendications 1 à 12, **caractérisé en ce que** les canaux (10) du corps de réacteur dépourvus d'électrodes sont ouverts sur les deux faces du corps de réacteur (8).

## Claims

1. Reactor intended for the treatment of gas flows by plasma, in particular for the treatment of exhaust gases produced by an internal combustion engine of a motor vehicle, comprising a reactor body (8) of generally elongated shape, made of a dielectric material and traversed by a plurality of parallel channels (10) extending longitudinally in the said body, means of inlet and outlet (6, 7) to conduct the flow of gas to be treated across the said body (8) and electrodes (14) intended to create corona discharges in the said body in order to stimulate in it the treatment of the said gases, **characterised in that** each of the said electrodes (14) is arranged in a channel (10) forming part of the said plurality of channels (10) and extends over at least a portion of the length of the corresponding channel, **in that** the channels (10) are arranged side by side in the said reactor body (8) according to longitudinal planes arranged above one another, **in that** the said electrodes (14) are arranged in at least two beds of parallel electrodes (12, 13), one of which comprises electrodes intended to be connected to one of the poles of a high-voltage source (21) and the other of which comprises electrodes intended to be arranged so as to be connected to the other pole of the said high-voltage source (21), and **in that** the said beds of electrodes (12, 13) are spaced one from another at a predetermined distance.

2. Reactor according to Claim 1, **characterised in that** the ends of the electrodes (14) of a same bed of electrodes (12, 13) and located in a same front face of the said reactor body (8) are connected in common to a bar (15, 16) which conducts electricity and is connected to the corresponding pole of the said high-voltage source (21).

3. Reactor according to Claim 2, **characterised in that** the said connection bar (15, 16) is arranged in a slot (22) arranged in an end face of the reactor body (8).

4. Reactor according to Claim 3, **characterised in that** the said slot (22) accommodating the said connection bar (15, 16) is enclosed by a dielectric material (23).

5. Reactor according to any of Claims 2 to 4, **characterised in that** the end of each electrode (1') opposite to the said connection bar (15, 16) is submerged in a dielectric material (14), covering the channel (10) accommodating this electrode at the corresponding end.

6. Reactor according to any of Claims 1 to 5, **characterised in that** it comprises at least three beds of electrodes (12, 13) and **in that** the bed(s) of electrodes connected to one of the poles of the said high-voltage source (21) is/are arranged between two beds of electrodes connected to the other pole of the said high-voltage source (21).

7. Reactor according to any of Claims 1 to 4, **characterised in that** the electrodes (14) of the two adjacent beds of electrodes (12,13) arranged above one another are arranged in channels (10) aligned in planes perpendicular to these beds of electrodes.

8. Reactor according to any of Claims 1 to 4, **characterised in that** the electrodes (14) of the two adjacent beds of electrodes (12,13) arranged above one another are inserted into respective channels arranged in fives.

9. Reactor according to any of the preceding Claims, **characterised in that** the said electrodes (14) are formed by rods, for preference of general circular cross-section.

10. Reactor according to Claim 9, **characterised in that** the rods of at least certain of the said electrodes (14) are provided with rough surfaces or reliefs (25).

11. Reactor according to Claim 10, **characterised in that** the rough surfaces (25) or reliefs of the electrodes (14) extend according to a helicoidal profile alone their length.

12. Reactor according to any of the preceding Claims, **characterised in that** the said reactor body (8) is made of a ceramic such as corderite.

13. Particle filter, **characterised in that** it comprises a reactor in accordance with any of the preceding Claims, in which the channels (10) of the said reactor body (8) lacking electrodes (14) are alternatively covered (11a, 11b) on one or the other face of the said body.

14. Particle filter according to Claim 13, **characterised in that** channels located in two parallel adjacent planes (P1, P2) in the said reactor body (8) are covered (11 a, 11 b) respectively on one or the other face of the said body.

15. Particle filter according to Claim 13, **characterised in that** adjacent channels (10) located in a same plane of the said reactor body are alternatively covered (11 a, 11 b) on one and the other face of the body.

16. Particle filter according any of Claims 13 to 15, **characterised in that** the walls of the channels are clad in a catalytic material.

17. Catalytic converter **characterised in that** it comprises a reactor according to any of Claims 1 to 12, **characterised in that** the channels (10) of the reactor body lacking electrodes are open on both the faces of the reactor body (8).

## Patentansprüche

1. Reaktor, bestimmt zur Behandlung eines Gasstroms durch Plasma, insbesondere zur Behandlung von Abgasen erzeugt von einem Verbrennungsmotor eines Kraftfahrzeugs, aufweisend einen Reaktorkörper (8) von im Allgemeinen länglicher Form, realisiert aus einem dielektrischen Material und durchlaufen von einer Mehrzahl von parallelen Kanälen (10), die sich longitudinal in dem Körper erstrecken, Eintrittsmittel und Austrittismittel (6, 7) zum Leiten des zu behandelnden Gasstroms durch den Körper (8), und Elektroden (14), bestimmt zum Erzeugen von Corona-Entladungen in dem Körper, um dort die Behandlung des Gasstroms zu stimulieren, **dadurch gekennzeichnet, dass** jede der Elektroden (14) in einem Kanal (10) angeordnet ist, der Teil der Mehrzahl von Kanälen (10) ist, und sich über zumindest einen Teil der Länge des zugehörigen Kanals erstreckt, wobei die Kanäle in dem Reaktorkörper (8) nebeneinander gemäß überlagerten longitudinalen Ebenen angeordnet sind, wobei die Elektroden (14) in mindestens zwei parallelen Elektrodenbetten (12, 13) angeordnet sind, von denen eines Elektroden umfasst, bestimmt zum Anschließen an einen der Pole einer Hochspannungsquelle (21), und von denen das andere Elektroden umfasst, bestimmt um angeordnet zu werden für ein Anschließen an den anderen Pol der Hochspannungsquelle (21), und wobei die Elektrodenbetten (12, 13) voneinander um einen vorbestimmten Abstand entfernt sind.

2. Reaktor nach Anspruch 1, **dadurch gekennzeichnet, dass** die Enden der Elektroden (14) eines selben Elektrodenbetts (12, 13), und die auf einer selben Vorderseite des Reaktorkörpers (8) angeordnet sind, gemeinsam mit einem elektrisch leitfähigen und an dem entsprechenden Pol der Hochspannungsquelle (21) angeschlossenen Balken (15, 16) verbunden sind.

3. Reaktor nach Anspruch 2, **dadurch gekennzeichnet, dass** der Verbindungsbalken (15, 16) in einer in eine Endfläche des Reaktorkörpers (8) eingearbeiteten Nut (22) angeordnet ist.

4. Reaktor nach Anspruch 3, **dadurch gekennzeichnet, dass** die den Verbindungsbalken (15, 16) aufnchmende Nut (22) durch ein dielektrisches Material (23) verschlossen ist.

5. Reaktor nach einem der Ansprüche 2 bis 4, **dadurch gekennzeichnet, dass** das dem Verbindungsbalken (15, 16) gegenüberliegende Ende jeder Elektrode (14) in ein dielektrisches Material (14) eingebettet ist, welches den diese Elektrode aufnehmenden Kanal (10) an dem zugehörigen Ende verschließt.

6. Reaktor nach einem der Ansprüche 1 bis 5, **dadurch gekennzeichnet, dass** er mindestens drei Elektrodenbetten (12, 13) umfasst, und wobei das oder die mit einem der Pole der Hochspannungsquelle (21) vcrbundene(n) Elektrodenbett(en) zwischen zwei Elektrodenbetten angeordnet ist/sind, die mit dem anderen Pol der Hochspannungsquelle (21) verbunden sind.

7. Reaktor nach einem der Ansprüche 1 bis 4, **dadurch gekennzeichnet, dass** die Elektroden (14) von zwei nebeneinander überlagerten Elektrodenbetten (12, 13) in Kanälen (10) angeordnet sind, die in zu den Elektrodenbetten senkrechten Ebenen ausgerichtet sind.

8. Reaktor nach einem der Ansprüche 1 bis 4, **dadurch gekennzeichnet, dass** die die Elektroden (14) von zwei nebeneinander überlagerten Elektrodenbetten (12, 13) in jeweilige Kanäle eingesetzt sind, die zueinander versetzt angeordnet sind.

9. Reaktor nach einem der vorhergehenden Ansprüche, **dadurch gekennzeichnet, dass** die Elektroden (14) durch Stangen gebildet sind, vorzugsweise von im Allgemeinen kreisförmigen Querschnitt.

10. Reaktor nach Anspruch 9, **dadurch gekennzeichnet, dass** die Stangen zumindest einiger der Elektroden (14) mit Unebenheiten oder Reliefs (25) versehen sind.

11. Reaktor nach Anspruch 10, **dadurch gekennzeichnet, dass** die Unebenheiten (25) oder die Reliefs der Elektroden (14) sich gemäß einem schraubenförmigen Profil entlang der Länge dieser erstrecken.

12. Reaktor nach einem der vorhergehenden Ansprüche, **dadurch gekennzeichnet, dass** der Reaktorkörper (8) aus Keramik, wie Cordierit, realisiert ist.

13. Partikelfilter, **dadurch gekennzeichnet, dass** er einen Reaktor nach einem der vorhergehenden Ansprüche umfasst, und wobei die Kanäle (10) des Reaktorkörpers (8) ohne die Elektroden (14) alternativ auf der einen oder auf der anderen Seite des Körpers verschlossen (11a, 11b) sind.

14. Partikelfilter nach Anspruch 13, **dadurch gekennzeichnet, dass** in zwei parallelen benachbarten Ebenen (P1, P2) in dem Reaktorkörper (8) angeordnete Kanäle jeweils auf der einen oder auf der anderen Seite des Körpers verschlossen (11a, 11b) sind.

15. Partikelfilter nach Anspruch 13, **dadurch gekennzeichnet, dass** in einer selben Ebene des Reaktorkörpers (8) angeordnete benachbarte Kanäle (10) alternativ auf der einen und auf der anderen Seite des Körpers verschlossen (11a, 11b) sind.

16. Partikelfilter nach einem der Ansprüche 13 bis 15, **dadurch gekennzeichnet, dass** die Wände der Kanäle mit einem katalytischen Material beschichtet sind.

17. Katalysator, **dadurch gekennzeichnet, dass** er einen Reaktor nach einem der Ansprüche 1 bis 12 umfasst, **dadurch gekennzeichnet, dass** die Kanäle (10) des Reaktorkörpers ohne die Elektroden auf beiden Seiten des Reaktorkörpers (8) offen sind.
